# EUROPEAN PATENT APPLICATION

(11) **EP 3 346 420 A1**
(43) Date of publication of application: **11.07.2018**
(21) Application number: 16862497.1
(22) Date of filing: 04.11.2016
(51) Int. Cl.: G06K 19/077, H01Q 1/22, H01Q 1/38, G06K 19/07, G06Q 20/16, G06Q 20/32

(54) **SMART MULTI-CARD CAPABLE OF SIMULTANEOUSLY USING PLURALITY OF CARD OUTPUT SCHEMES, AND PAYMENT OR ACCUMULATION METHOD USING SAME**

(30) Priority: 06.11.2015 KR 20150155653; 10.11.2015 KR 20150007269 U
(71) Applicant: Brilliantts Co. Ltd., Seongnam-si, Gyeonggi-do 13494 (KR)
(72) Inventor: BAE, Jae Hun, Seongnam-si Gyeonggi-do 13456 (KR); JUNG, Byung Chul, Seoul 06548 (KR)
(74) Representative: Zardi, Marco
(86) International application number: PCT/KR2016/012695
(87) International publication number: WO 2017/078482

(57) **Abstract**

The present invention relates to a smart multi-card capable of simultaneously using a plurality of card output schemes, and a payment method using the same. More specifically, a smart multi-card device capable of simultaneously using a plurality of card output schemes, according to one embodiment of the present invention, comprises: a storage unit which stores one or more types of card information having individual card output schemes inputted by a user; and a plurality of sensors, wherein each of the plurality of sensors comprises: a sensor unit which matches at least one type of card information of the one or more types of card information inputted by the user; and a control unit which performs control so that when the user touches a specific sensor of one or more sensors, card information matching the specific sensor is loaded, and a payment or accumulation is performed according to the card output scheme of the loaded card information. When there is a plurality of types of card information match the specific sensor, each of the plurality of types of card information is loaded and the payment or accumulation can be simultaneously performed according to the card output scheme of each of the loaded plurality of cards.

## Description

### Field of the invention

The present invention relates to a smart multi-card which makes it possible to simultaneously use a plurality of card output schemes and a payment or accumulation method using the same, and more particularly, to a method of simultaneously performing a payment or accumulation by using individual output schemes of a plurality of cards whose information is included in one smart multi-card.

### Related Art

As modern society has rapidly become information-based and credit-based after industrialization, the use of credit cards, which are referred to as "plastic money," has increased to be as much as that of cash.

Accordingly, the number of credit cards carried by a regular adult has also significantly increased, and thus each person uses at least two or three cards, and in some cases, ten or more cards are held and used.

Also, in accordance with marketing activation, issuance of various point cards has become an essential marketing item in most business to consumer (B2C)-based corporations and has generally been utilized to increase sales at small stores located in commercial alley areas.

Thus, tens of cards are actually being unintentionally issued. However, most of such cards are discarded after generation, which just leads to unnecessary issuing costs and social costs.

Further, in some cases, point cards or discount cards of stores that are not frequently visited cannot be utilized when such cards are not held during actual visits.

This causes avoidance of card issuance due to inconvenient and complex card management from a consumer standpoint and causes generation of unnecessary marketing costs from a corporate standpoint. That is, this causes waste and irrationality in terms of both supply and demand.

For credit cards, which are actually determined to have higher utilization than point cards, the number of credit cards held by each person increased to 4 in 2001, stopped increasing for a while after a credit card liquidity crisis, and then continued to increase to 4.9 in 2011. The total number of credit cards that have been issued has reached about 122,130,000 in 2011.

While the number of cards that have been issued has continuously increased, the number of cards that are actually used by each person is just 1.4. As a result, most credit cards held by each person are dormant, and about 20,000,000 or more cards (corresponding to about 40,000,000,000 won or more) are actually being discarded.

When various cash replacement cards such as debit cards, check cards, cash cards, and prepaid cards or marketing cards such as point cards or discount cards are included in the above figure, it is feasible to say that astronomical costs are being wasted.

Accordingly, a method for solving the above problems is required.

### SUMMARY OF THE INVENTION

An aspect of the present invention is to provide one smart multi-card including all of a plurality pieces of card information having any one of a contact-type output scheme, a contactless-type output scheme, and an output scheme in which a smart device is used in order to solve the above problems.

Another aspect of the present invention is to provide a smart multi-card which makes it possible to perform a payment or accumulation by simultaneously using a plurality of card output schemes in order to solve the above problems.

Another aspect of the present invention is to provide one smart multi-card in which a plurality of pieces of card information are stored to save costs for producing unnecessary cards and a user can simultaneously perform a payment or accumulation according to individual card output schemes of the plurality of cards.

Another aspect of the present invention is to provide a method of performing a payment or accumulation through a smart multi-card in which a plurality of card output schemes can be simultaneously used.

Technical objects to be achieved by the present invention are not limited to those mentioned above, and other technical objects that have not been mentioned will be clearly understood by those of ordinary skill in the art to which the present invention pertains from the following description.

In order to solve such a problem, A smart multi-card device which makes it possible to simultaneously use a plurality of card output schemes according to an aspect of the present invention comprising a storage unit configured to store one or more pieces of card information input by a user and having individual card output schemes, a sensor unit configured to include a plurality of sensors, each of which is matched to one or more pieces of card information among the one or more pieces of card information input by the user, and a control unit configured to, when the user contacts a specific sensor among the one or more sensors, load card information matched to the specific sensor and controls a payment or accumulation to be performed according to a card output scheme of the loaded card information, wherein when a plurality of pieces of card information are matched to the specific sensor, the plurality of pieces of card information are loaded, and the payment or the accumulation is simultaneously performed according to card output schemes of a plurality of loaded cards.

For a smart multi-card device which makes it possible to simultaneously use a plurality of card output schemes according to an aspect of the present invention, each of the card output schemes is any one of a contact-type output scheme, a contactless-type output scheme, and an output scheme in which a smart device is used.

For a smart multi-card device which makes it possible to simultaneously use a plurality of card output schemes according to an aspect of the present invention, according to the contact-type output scheme, the payment or the accumulation is performed when the smart multi-card comes in contact with or is inserted into a contact-type payment terminal, according to the contactless-type output scheme, the smart multi-card is recognized by a contactless-type payment terminal to perform the payment or the accumulation, and according to the output scheme in which a smart device is used, the smart multi-card loads a card stored in the smart device to perform the payment or the accumulation through the contact-type or contactless-type payment terminal.

For a smart multi-card device which makes it possible to simultaneously use a plurality of card output schemes according to an aspect of the present invention, the plurality of pieces of card information matched to the specific sensor have different card output schemes.

For a smart multi-card device which makes it possible to simultaneously use a plurality of card output schemes according to an aspect of the present invention, the plurality of pieces of card information matched to the specific sensor include at least one of card information for payment and card information for accumulation.

For a smart multi-card device which makes it possible to simultaneously use a plurality of card output schemes according to an aspect of the present invention, the matching is settable by the user himself or herself.

For a smart multi-card device which makes it possible to simultaneously use a plurality of card output schemes according to an aspect of the present invention, a plurality of situations in which the user uses a card are distinguished , and the matching is set so that at least one or more pieces of card information used in each of the plurality of situations among the input one or more pieces of card information correspond to each of the plurality of sensors.

For a smart multi-card device which makes it possible to simultaneously use a plurality of card output schemes according to an aspect of the present invention, wherein the sensor unit includes a touch sensor, the plurality of situations are classified according to a number of touch times of the touch sensor, and the payment or the accumulation is performed using one or more pieces of card information matched to a situation corresponding to a number of times that the user touches the touch sensor.

A smart multi-card device which makes it possible to simultaneously use a plurality of card output schemes according to an aspect of the present invention, further comprises a display unit configured to display at least one kind of information among the one or more pieces of card information and the card output schemes input by the user and the loaded card information and card output scheme.

For a smart multi-card device which makes it possible to simultaneously use a plurality of card output schemes according to an aspect of the present invention, the card output scheme includes a barcode output scheme, when the user touches a specific sensor among the one or more sensors, the control unit controls the display unit to display barcode information corresponding to card information matched to the specific sensor, and the payment or the accumulation is performed when the displayed barcode information is scanned by a payment terminal.

In order to solve such a problem, a method of performing a payment or accumulation using a smart multi-card which makes it possible to simultaneously use a plurality of card output schemes comprises receiving one or more pieces of card information having individual card output schemes from a user, matching at least one piece of card information among the one or more pieces of card information received from the user to each of a plurality of sensors in the smart multi-card, and when the user contacts a specific sensor among the one or more sensors, loading card information matched to the specific sensor and performing a payment or accumulation according to a card output scheme of the loaded card information, wherein when a plurality of pieces of card information are matched to the specific sensor, the plurality of pieces of card information are loaded, and the payment or the accumulation is simultaneously performed according to card output schemes of a plurality of loaded cards.

According to the present invention described above, the following effects can be obtained. However, effects of the present invention are not limited thereto.

First, according to the present invention, it is possible to provide one smart multi-card including all of a plurality of pieces of card information having any one of a contact-type output scheme, a contactless-type output scheme, and an output scheme in which a smart device is used.

Second, according to the present invention, it is possible to provide a smart multi-card in which a payment or accumulation can be performed by simultaneously using a plurality of card output schemes.

Third, according to the present invention, it is possible to save costs for producing unnecessary cards by storing a plurality of pieces of card information in one card, and a user can simultaneously perform a payment or accumulation according to individual card output schemes of the plurality of cards.

Fourth, according to the present invention, it is possible to provide a method of performing a payment or accumulation through a smart multi-card in which a plurality of card output schemes can be simultaneously used.

Fifth, since an arrangement of an NFC antenna differs from a conventional arrangement of an NFC anatenna, it is possible to efficiently arrange parts in a thin card. For example, when an NFC antenna module is arranged in the back space of a display module, space for arranging other parts may be expanded to an edge region of the card in which an NFC antenna is conventionally arranged. In other words, an NFC antenna is arranged under a display region, and other parts are arranged in an antenna region of a conventional smart card, so that some of limitations on design can be removed.

Sixth, since each of parts which constitute a multi-card is formed as a module which is attachable and detachable, it is possible to rapidly manufacture a multi-card with specifications wanted by a company in a business to business (B2B) business. For example, when it is possible to determine a capacity of a memory module according to the number of pieces of card information wanted to be stored by a buying company and a magnetic field generation module is not included in specifications wanted by the buying company, it is possible to rapidly manufacture a multi-card including no magnetic field generation module by combining a PCB module, which has the same shape as a magnetic field generation module but includes no part, with the multi-card.

Seventh, since a multi-card with which one or more modules are combined is surrounded by an NFC antenna module, it is possible to keep the one or more modules combined, and since each of the modules is attachable/detachable, it is possible to solve a problem that an NFC antenna cannot be arranged at an edge of a card.

Effects that can be obtained from the present invention are not limited to the aforementioned effects, and other effects that have not been mentioned will be clearly understood by those of ordinary skill in the art to which the present invention pertains from the following description.

### BRIEF DESCRIPTION OF THE DRAWINGS

FIG. 1 is an internal configuration diagram of a smart multi-card according to an embodiment of the present invention.
FIG. 2 is an example of an exterior view of a smart multi-card according to an embodiment of the present invention.
FIG. 3 is a diagram showing connection relationships among a smart multi-card, a smart device, and an external server.
FIG. 4 is a diagram showing an example of a process of performing a payment or accumulation by simultaneously using a plurality of card output schemes through a smart multi-card according to an embodiment of the present invention.
FIG. 5 is a diagram showing an example of a process of performing a payment or accumulation by simultaneously using a plurality of card output schemes through a smart multi-card according to another embodiment of the present invention.
FIG. 6 is an internal configuration diagram of a multi-card including a near field communication (NFC) antenna module according to embodiments of the present invention.
FIG. 7 is a configuration diagram of a multi-card in which an NFC antenna module is arranged in parallel with a display module according to an embodiment of the present invention.
FIG. 8 is an example diagram of a multi-card in which each element is modularized to be attachable and detachable according to an embodiment of the present invention.
FIG. 9 is an example diagram of a multi-card including an NFC antenna module surrounding edges of a multi-card in which a plurality of modules are combined according to an embodiment of the present invention.
FIG. 10 is an example diagram of connection between a second connection interface of an NFC antenna module formed as a metal terminal and a first connection interface of a control module according to an embodiment of the present invention.

### DESCRIPTION OF EXEMPLARY EMBODIMENTS

Hereinafter, preferred embodiments of the present invention will be described in detail with reference to the accompanying drawings. The detailed description of the present invention that is to be disclosed along with the appended drawings is intended to describe exemplary embodiments of the present invention and is not intended to present the only embodiments that can be implemented according to the present invention.

These embodiments are provided to make disclosure of the present invention be thorough and complete and to fully convey the scope of the invention to those of ordinary skill in the art to which the present invention pertains. The present invention is only defined by the scope of the claims.

In some cases, to avoid any ambiguity in the concept of the present invention, well-known structures and devices may be omitted, or the present invention may be illustrated in the form of a block diagram focusing on essential functions of each structure and device. Throughout this specification, like elements are described with like reference numerals.

In the entire specification, when a part is said to be "comprising (or including)" an element, unless specifically stated otherwise, this denotes that other elements may be further included instead of excluding other elements.

Also, the term "...unit" stated in the specification denotes a unit which processes at least one function or operation and may be implemented in the form of hardware or software or a combination of hardware and software. Furthermore, unless indicated otherwise within the context for describing the present invention or clearly denied by the context, "a (or an)," "one," and other similar terms may be used as a meaning including both singular and plural forms.

Moreover, specific terms used in embodiments of the present invention are provided to facilitate the understanding of the present invention, and all terms used herein, including technical or scientific terms, shall have the same meanings as the terms generally understood by those of ordinary skill in the art to which the present invention pertains unless defined otherwise. Use of such specific terms may be modified in other forms without departing from the technical spirit of the present invention.

Hereinafter, preferred embodiments of the present invention will be described in detail with reference to the accompanying drawings. The detailed description of the present invention that is to be disclosed along with the appended drawings is intended to describe exemplary embodiments of the present invention and is not intended to present the only embodiments that can be implemented according to the present invention.

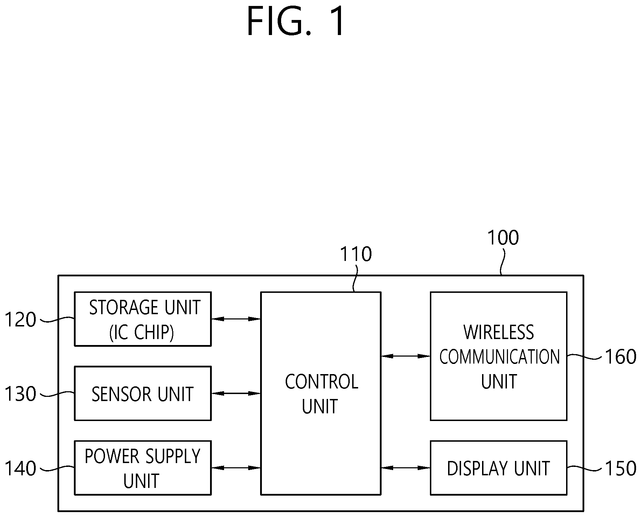

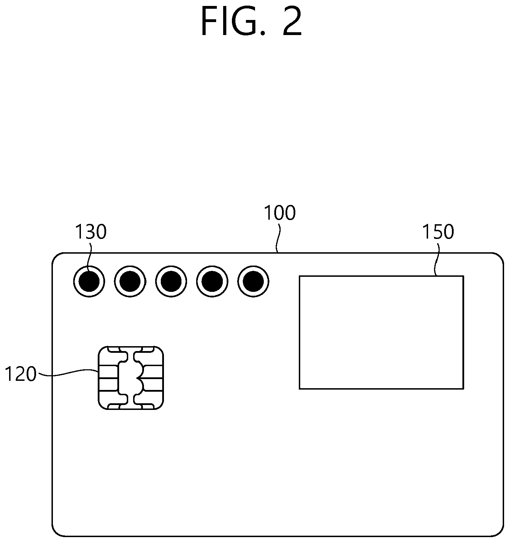

FIG. 1 is an internal configuration diagram of a smart multi-card according to an embodiment of the present invention, and FIG. 2 is an example of an exterior view of a smart multi-card according to an embodiment of the present invention.

Referring to FIGS. 1 and 2, a smart multi-card 100 according to an embodiment of the present invention may include a control unit 110, a storage unit 120, a sensor unit (or a user input unit) 130, a power supply unit 140, a wireless communication unit 160, and a display unit 150.

Unlike a conventional card which includes one integrated circuit (IC) chip and thus stores only one piece of card information, the smart multi-card 100 corresponds to one card capable of storing a plurality of pieces of card information therein. In other words, the smart multi-card 100 is a card which makes it possible to perform a payment or accumulation according to individual card payment schemes by simultaneously loading one or more pieces of card information among the one or more pieces of card information stored therein. Such a payment or accumulation will be described below.

Meanwhile, the control unit 110 of the smart multi-card 100 generally functions to control overall operation of the smart multi-card 100 by controlling operations of the individual units.

For example, the control unit 110 functions to determine a user's command by processing data input from the user. Also, the control unit 110 performs information processing to transmit data including an output scheme, card payment information, and the like to an external card terminal or smart device (or a user terminal) through wireless communication, and functions to process information in order to store data received from the card terminal or the smart device through wireless communication in the storage unit 120 of the smart multi-card 100 or display the data on the display unit 150.

The sensor unit 130 of the smart multi-card 100 functions to receive the user's input for controlling an operation of the smart multi-card 100 and transfer the input to the control unit 110. The sensor unit 130 may be composed of a keypad, a keyboard, a dome switch, a touch sensor, a (static pressure/capacitive) touchpad, or the like but is not limited thereto. In other words, the sensor unit 130 may be construed as including all input schemes which enable the user to input card-related information, card output scheme information, and the like or make an input for selecting a specific card among previously input one or more cards and have been developed at present or will be developed in the future.

The power supply unit 140 of the smart multi-card 100 serves to receive external power and/or internal power under control of the control unit 110 and supply power required for operations of individual elements.

The wireless communication unit 160 of the smart multi-card 100 functions to exchange data with an external smart device, card terminal, server, and the like.

For example, the wireless communication unit 160 may transmit data for a payment or accumulation through wireless communication and exchange data with the card terminal or the smart device through wireless communication to input or output information such as card information, a card output scheme, or the like. Also, the wireless communication unit 160 may include a wireless Internet module, a short-range communication module, a global positioning system (GPS) module, and the like.

Here, the wireless Internet module refers to a module for wireless Internet access and may be embedded in the smart multi-card 100 or externally installed on the smart multi-card 100. As a wireless Internet technology, wireless local area network (WLAN) (or wireless fidelity (Wi-Fi)), wireless broadband (WiBro), world interoperability for microwave access (WiMAX), high speed downlink packet access (HSDPA), long term evolution (LTE), long term evolution-advance (LTE-A), and the like may be used.

The short-range communication module refers to a module for performing communication within a predetermined short range. As a short-range communication technology, a beacon, Bluetooth, radio frequency identification (RFID), infrared data association (IrDA), ultra wideband (UWB), ZigBee, and the like may be used.

Bluetooth low energy (BLE) refers to a Bluetooth communication scheme which uses a different packet configuration and enables faster communication due to a simplified connection procedure, compared to conventional classic Bluetooth.

BLE makes it possible to easily apply a protocol, which has been improved to rapidly and easily transfer information read from certain sensors, to items used in daily life. BLE (Bluetooth 4.0) makes it possible to communicate with other devices within about 5 m to about 70 m and minimize waste of power due to low power consumption which has almost no influence on a battery life of a device, so that the function of Bluetooth can be always turned on. Also, a BLE module may receive card-related information, card output scheme information, a control command for the smart multi-card 100, or the like to be stored in the storage unit 120 from the smart device through the BLE scheme and transmit the information to an external device or the smart multi-card 100.

The beacon transfers a very small frequency signal to surroundings using a protocol based on Bluetooth 4.0 (BLE). The beacon constantly broadcasts the presence of a wireless network, causes a signal receiving device to search for and join the wireless network, and transfer information.

An NFC module corresponds to a contactless communication technology which is one of wireless tag (RFID) technologies and a communication technology for exchanging various kinds of wireless data within a short distance of 10 cm. Due to the short communication range, NFC provides relatively excellent security, has a low price, and thus is a next-generation short-range communication technology in the spotlight. Since it is possible to use both data read and write functions, a dongle (reader) which is conventionally required to use RFID is unnecessary. Also, NFC is similar to a conventional short-range communication technology, but it is unnecessary to make a setting between devices unlike Bluetooth. The NFC module may exchange data with the smart device or make a contactless payment in association with the card terminal through wireless communication.

The display unit 150 functions to display card information, card output scheme information, and/or the like to the user. In other words, the display unit 150 may output and display information processed in the smart multi-card 100. For example, when a plurality of card output schemes of the smart multi-card 100 are simultaneously used to perform a payment or accumulation, information related to the payment or accumulation may be displayed through a user interface (UI) or a graphical user interface (GUI).

At this time, the display unit 150 may display barcode information and the like of a card which will be used for the payment or accumulation. When a card other than the cards previously stored in the smart multi-card 100 is added, the display unit 150 may display information related to connection with the smart device or the card terminal through a UI or a GUI.

Meanwhile, when the display unit 150 and a touchpad constitute a touch screen together in a layered structure as mentioned above, this may be referred to as a touch screen, and the display unit 150 may be used as an input device as well as an output device. When the display unit 150 is configured as a touch screen, the display unit 150 may include a touch screen panel, a touch screen panel controller, and the like.

In addition to these, the display unit 150 may include at least one of a liquid crystal display (LCD), a thin film transistor (TFT) LCD, an organic light-emitting diode (OLED), a flexible display, and an electronic paper (E-paper). According to an implementation form of the smart multi-card 100, there may be two or more display units 150. For example, the display unit 150 may be provided on each of the front side and the back side of the smart multi-card 100, or unlike this, one or more displays may be provided on each of the front side and the back side.

The storage unit 120 of the smart multi-card 100 functions to store information required to use the smart multi-card 100. For example, the storage unit 120 may store card information used for a payment or accumulation and function to store output scheme information of the cards and/or a security certificate of the user. When the smart multi-card 100 includes a user authentication function, the storage unit 120 may also store biological information (e.g., a fingerprint, iris information, and the like) of the user for user authentication.

Also, the storage unit 120 may store a program for processing and control of the control unit 110. For example, the storage unit 120 may store an operating system (OS) for running the smart multi-card 100. Additionally, the storage unit 120 may provide a work space for card operations, such as encryption and decryption.

Further, the storage unit 120 may be configured in the form of an IC chip and the like and may further include a microprocessor unit (MPU) having a self-calculation function in the IC chip. Also, the IC chip may be exposed to the outside of the card and may physically come in direct contact with a contact-type card terminal to make a payment.

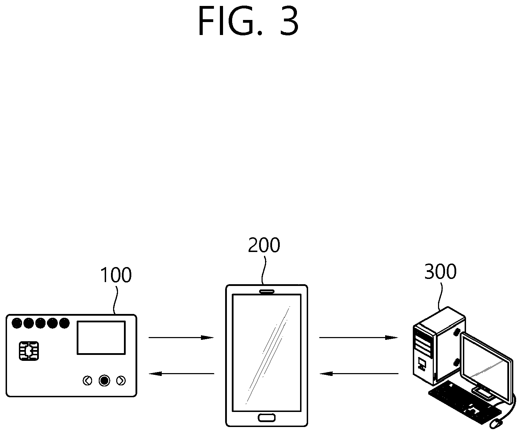

FIG. 3 is a diagram showing connection relationships among a smart multi-card, a smart device, and an external server.

Referring to FIG. 3, a network for transmitting and receiving data between a smart multi-card which is the present invention, a smart device, and an external server may be configured among the smart multi-card, the smart device, and the external server.

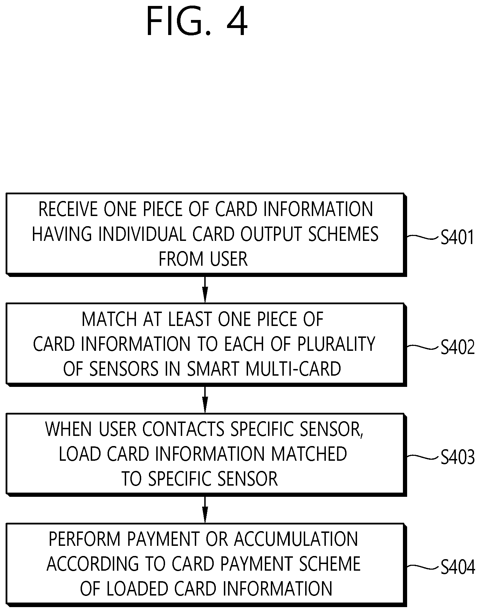

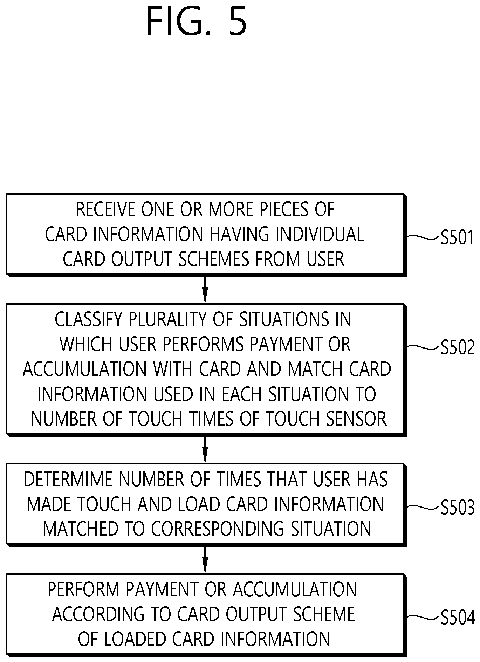

Since the smart multi-card 100 has been described above with reference to FIG. 2, description of the smart multi-card 100 will be omitted or simplified, and further detailed description of the smart multi-card 100 will be made below with reference to FIGS. 4 and 5.

A smart device 200 may be construed as including any terminal capable of transmitting and receiving communication signals according to an embodiment of the present invention, that is, data.

In the smart device 200, one or more programs or applications may be installed, and particularly, an application program interface (API) or an application including embedded software related to the smart multi-card 100 which is an embodiment of the present invention may be installed.

The smart device 200 may exchange data or signals with the smart multi-card 100 and/or a server 300 by itself or through the one or more installed programs or applications, and the exchanged data or signals may be related to the smart multi-card which is an embodiment of the present invention.

Examples of the smart device 200 may include a personal computer (PC), a television (TV), a laptop computer, a tablet PC, a terminal device, a terminal, a mobile station (MS), a mobile subscriber station (MSS), a subscriber station (SS), an advanced mobile station (AMS), a wireless terminal (WT), a machine-type communication (MTC) device, a machine-to-machine (M2M) device, and a device-to-device (D2D) device.

The smart device 200 is a common name of mobile devices referred to as a wearable device, wearable grass, a wearable band, a wearable watch, and the like.

Needless to say, this is merely exemplary, and a smart device in the present invention should be construed as including any device which is capable of data or signal transmission and has been developed and commercialized at present or will be developed in the future in addition to the aforementioned examples.

Referring back to FIG. 3, the server 300 denotes an object capable of exchanging data with one or more other devices via a wired or wireless communication network. In the present invention, the server 300 may further include a relay server, an intermediate server, and/or a client server.

Examples of the server 300 may include a cloud server, an Internet protocol (IP) multimedia subsystem (IMS) server, a telephony application server, an instant messaging (IM) server, a media gateway control function (MGCF) server, a messaging gateway (MSG) server, and a call session control function (CSCF) server, and the server 300 may be implemented as a device corresponding to an object capable of transmitting and receiving data, such as a PC, a laptop computer, a tablet PC, and the like.

Meanwhile, the network denotes a data communication network which may be used to exchange data between the smart multi-card 100, the smart device 200, and the server 300, and there is no limitation on the type of network.

For example, the network may be an IP network which provides a service for transmitting and receiving a large amount of data through the IP or an all IP network in which different IP networks are integrated.

Also, the network may be one of a wired network, mobile communication networks including a WiBro network and a wideband code-division multiple access (WCDMA) network, mobile communication networks including an HSDPA network and an LTE network, mobile communication networks including an LTE-A network and a five generation (5G) network, a satellite communication network, and a Wi-Fi network, or a combination of at least one of them.

FIG. 4 is a diagram showing an example of a process of performing a payment or accumulation by simultaneously using a plurality of card output schemes through a smart multi-card according to an embodiment of the present invention.

Referring to FIG. 4, a smart multi-card of the present invention may receive one or more pieces of card information having individual card output schemes from a user (S401).

According to an embodiment of the present invention, each of the card output schemes may be any one of a contact-type output scheme, a contactless-type output scheme, and an output scheme in which a smart device is used, and a barcode output scheme may be additionally included therein.

More specifically, according to the contact-type output scheme, a payment or accumulation is performed when the smart multi-card comes in contact with or is inserted into a contact-type payment terminal. According to the contactless-type output scheme, the smart multi-card is recognized by a contactless-type payment terminal to perform a payment or accumulation, and according to the output scheme in which a smart device is used, the smart multi-card loads a card stored in the smart device to make a payment or an output through a contact-type or contactless-type payment terminal.

The contact-type output scheme in which the smart multi-card comes in contact with or is inserted into a contact-type payment terminal to perform a payment or accumulation involves physically contacting the smart multi-card and the payment terminal, and accordingly, data including card information, user information, or the like may be exchanged with each other. Also, the contactless-type output scheme in which the smart multi-card is recognized by a contactless-type payment terminal to perform a payment or accumulation involves communicating with the contactless-type payment terminal using an antenna by means of radio frequency signals, so that a payment or accumulation can be performed without any physical contact.

In other words, the contactless-type output scheme makes it possible to exchange data including card information, user information, or the like with each other through wireless communication, such as NFC, BLE, Wi-Fi, and the like.

The scheme in which the smart multi-card loads a card stored in a smart device to perform a payment or accumulation through a contact-type or contactless-type payment terminal may include a scheme for performing a payment or accumulation using card information stored in the smart device instead of card information stored in the storage unit of the smart multi-card. Therefore, in this case, the smart multi-card may receive card information from the smart device and perform a payment or accumulation using the card information through a contact-type or contactless-type payment terminal.

The barcode output scheme denotes an output scheme in which barcode information corresponding to preset specific card information among one or more pieces of card information input by a user is displayed on a display unit and the displayed barcode information is scanned with a barcode scanner of a payment terminal to perform a payment or accumulation. When the barcode scanner of the payment terminal scans the barcode information displayed on the display unit of the smart multi-card, it is possible to exchange data including card-related information of the specific card corresponding to the barcode information, user information, information about whether a payment has been approved, or the like with the payment terminal.

Here, a barcode denotes a code which represents text, a numeral, a special character, or the like as a combination of vertical bars having different thicknesses to express the text, the number, the special character, or the like in a form readable by a machine and the like. As mentioned above, when a barcode scanner of a payment terminal scans barcode information, the barcode scanner reads information corresponding to the barcode information, so that a payment or accumulation function and a display function related to the barcode scanner may be performed on the basis of the read information.

Meanwhile, when one or more pieces of card information is input by the user, the smart multi-card may match at least one piece of card information among the one or more pieces of card information input by the user to each of a plurality of sensors in the smart multi-card.

Here, the card information may include at least one of card company information, a card name, a card company logo, a card image, a card number, a card expiration date, name information of a card owner, additional card information (e.g., card validation code (CVC) information and the like), card output scheme information, card benefit information, and information on card accumulation. When one or more pieces of card information is input by the user, the matching may be performed by the smart multi-card according to a preset criterion, or unlike this, the user may set the matching by himself or herself.

For more detailed example, the sensor unit 130 may include a plurality of sensors as shown in FIG. 2. For convenience of description, it is assumed below that the sensor unit includes five sensors (referred to as first to fifth sensors below) as shown in FIG. 2. However, this is merely exemplary, and the number of sensors included in the sensor unit may be increased or reduced according to an implementation.

In this situation, assuming that the smart multi-card receives information on four cards for payment (referred to as first to fourth payment cards below) and four cards for accumulation (referred to as first to fourth accumulation cards below) all together or not all together, the smart multi-card may match the information related to the four payment cards and the four accumulation cards to individual sensors in the sensor unit.

Here, it is assumed that when the first payment card and the first accumulation card are used together, discount benefit and accumulation benefit is greater than benefit of other combinations of cards, when the second payment card and the second accumulation card are used together, discount benefit and accumulation benefit is greater than benefit of other combinations of cards, and when the third payment card and the fourth accumulation card are used together, discount benefit and accumulation benefit is greater than benefit of other combinations of cards. In this case, according to the present invention, information on the first payment card and the first accumulation card may be matched to the first sensor, information on the second payment card and the second accumulation card may be matched to the second sensor, and information on the third payment card and the fourth accumulation card may be matched to the third sensor. However, needless to say, the sequence of matched sensors (ordinal numbers of sensors) may be changed according to a setting of the user, the frequencies of use of cards, and the like.

Meanwhile, although the fourth payment card and the third accumulation card are used together, there may be no additional accumulation benefit or discount benefit, or accumulation benefit and discount benefit may be less than other combinations of cards. In this case, the fourth payment card and the third accumulation card may be matched to the fourth and fifth sensors, respectively.

Here, the payment cards and the accumulation cards may have different card output schemes. For more detailed example, the first payment card may have an output scheme for performing a payment or accumulation according to an output scheme in which an IC chip is used, whereas the first accumulation card may perform a payment or accumulation according to an output scheme in which NFC is used.

In other words, according to an embodiment of the present invention, a plurality of pieces of card information matched to the individual sensors may have different card output schemes and include payment card information. However, it is self-evident that the plurality of pieces of card information may be matched to have the same card output scheme according to the smart multi-card or a setting of the user.

Meanwhile, when it is necessary to perform a payment or accumulation after card information is matched to each of the plurality of sensors as described above, the user may contact a specific sensor among the plurality of sensors in the smart multi-card to perform the payment or the accumulation.

In other words, when the user contacts a specific sensor previously matched to a desired card or a desired payment scheme among the plurality of sensors in the smart multi-card while it is necessary to perform a payment or accumulation, the smart multi-card loads card information matched to the specific sensor that the user contacts (S403).

At this time, the display of the smart multi-card may be outputting the one or more pieces of card information input by the user and the output schemes of the one or more cards. When the card information matched to the specific sensor that the user contacted is loaded, the display may display information including at least one of the loaded card information and an output scheme of the loaded card.

Meanwhile, when the card information matched to the specific sensor is loaded, a payment or accumulation may be performed according to a card output scheme of the loaded card information (S404).

Here, when the specific sensor is the first sensor mentioned in the above described example, the first payment card and the first accumulation card are matched to the first sensor, and as a result, it is possible to say that a plurality of pieces of card information are matched to the first sensor.

Like this, when a plurality of pieces of card information are matched to a specific sensor (the first sensor), all card information matched to the specific sensor (the first sensor) may be loaded onto the smart multi-card, and accordingly, all information on the first payment card and the first accumulation card may be loaded.

In this case, since the first payment card has an output scheme for performing a payment or accumulation using an IC chip and the first accumulation card has an output scheme for performing a payment or accumulation using NFC as mentioned above, the payment or the accumulation may be simultaneously performed according to the card output schemes of the first payment card and the first accumulation card when the smart multi-card is used for the payment or the accumulation.

In other words, when the user contacts the first sensor among the plurality of sensors, all information on the first payment card and the first accumulation card is loaded. In this case, when the smart multi-card in which the loading has been completed comes in contact with or is inserted into a payment terminal, an IC chip is recognized due to the contact or insertion, and the payment is performed with the first payment card. Additionally, since the smart multi-card is close to the payment terminal, the first accumulation card for performing accumulation using NFC is also recognized, and the accumulation may be performed at the same time as the payment.

As described above, when one or more cards having different output schemes according to an embodiment of the present invention are used to simultaneously perform a payment and accumulation according to the individual output schemes, the user does not need to carry several cards, and convenience of possession is remarkably improved. Furthermore, unlike other smart multi-cards which include several cards but with which a payment and accumulation are separately performed in sequence, the present invention makes it possible to simultaneously perform a payment or accumulation according to individual output schemes. Therefore, a switch between a payment card and an accumulation card is not required in the smart multi-card, so that convenience of payment or accumulation may be further improved.

FIG. 5 is a diagram showing an example of a process of performing a payment or accumulation by simultaneously using a plurality of card output schemes through a smart multi-card according to another embodiment of the present invention.

A method of loading one or more pieces of card information stored in a smart multi-card in a way different from that described above with reference to FIG. 4 will be described with reference to FIG. 5, and description overlapping the range of FIG. 4 will be omitted or simplified.

Referring to FIG. 5, a smart multi-card of the present invention may receive one or more pieces of card information having individual card output schemes from a user (S501).

According to an embodiment of the present invention, the smart multi-card may distinguish a plurality of situations in which the user uses a card for payment or accumulation. For such a situation distinction, several situations may be set in advance in the smart multi-card, or unlike this, such a situation distinction may be made by an input of the user.

Meanwhile, the plurality of situations may include situations in which the smart multi-card is used. For example, the plurality of situations may denote situations of a commute, a meal, a movie reservation, a payment in a convenience store, a payment in a grocery store, and the like.

Referring back to FIG. 5, when one or more pieces of card information are received from the user, the plurality of sensors may be distinguished according to a plurality of situations in which the user makes a card payment, and card information which may be individually used in the plurality of situations may be individually matched to the plurality of sensors distinguished according to the plurality of situations.

When the user gets into a specific situation among the plurality of situations after the above matching is made, the user may cause one or more pieces of card information which will be used to be loaded onto the smart multi-card by contacting a sensor corresponding to the specific situation among the plurality of sensors, and may simultaneously perform a payment or accumulation according to individual card output schemes after the one or more pieces of card information are loaded.

In the present invention, the sensor unit of the smart multi-card may include a touch sensor as mentioned above with reference to FIG. 1, and in this case, the touch sensor may be set to distinguish the plurality of situations according to the number of times that the touch sensor is touched.

In other words, when the plurality of situations are distinguished according to the number of times that the touch sensor is touched, card information used in each of the situations may be matched to each of the numbers of times that the touch sensor is touched (S502).

Therefore, when the user gets into a specific situation among the plurality of situations, the user may touch the touch sensor of the smart multi-card as many times as the number of touch times corresponding to the specific situation, and then one or more pieces of card information matched to the number of touch times may be loaded onto the smart multi-card. In this case, a payment or accumulation may be simultaneously performed according to individual output schemes of the loaded one or more cards (S503 and S504).

For example, if the user has a payment card and an accumulation card providing great discount benefit and great accumulation benefit when performing a payment or accumulation in a convenience store, the touch sensor may determine a situation in which the user uses a convenience store as a situation corresponding to a specific number of touch times (e.g., twice) under control of the user or the smart multi-card.

Also, the payment card and the accumulation card may be matched to the specific number of touch times (twice).

Subsequently, when the user selects a product and intends to perform a payment or accumulation in a convenience store, the user may load the payment card and the accumulation card onto the smart multi-card by touching the touch sensor of the smart multi-card twice and may perform the payment or the accumulation using the smart multi-card onto which the payment card and the accumulation card have been loaded. In this case, when the payment card and the accumulation card have different card output schemes, it is possible to simultaneously perform the payment or the accumulation according to the individual output schemes of the payment card and the accumulation card as described above.

Therefore, when the smart multi-card according to an embodiment of the present invention is used, there is an advantage in that it is possible to simultaneously perform a payment or accumulation using individual card output schemes of a plurality of cards.

The smart multi-card according to an embodiment of the present invention may have an NFC antenna, and it is possible to efficiently use space of the smart multi-card by changing a structure or a position of the NFC antenna.

Although the smart multi-card includes many elements to store a plurality of pieces of card information and perform a payment or accumulation using various output schemes, it is necessary to efficiently use the internal space of the smart multi-card so that the smart multi-card can be manufactured according to an existing card standard.

A smart multi-card including an NFC antenna for improving a structure or an arrangement of an antenna to enhance efficiency in designing an internal card structure will be disclosed in an embodiment of the present invention.

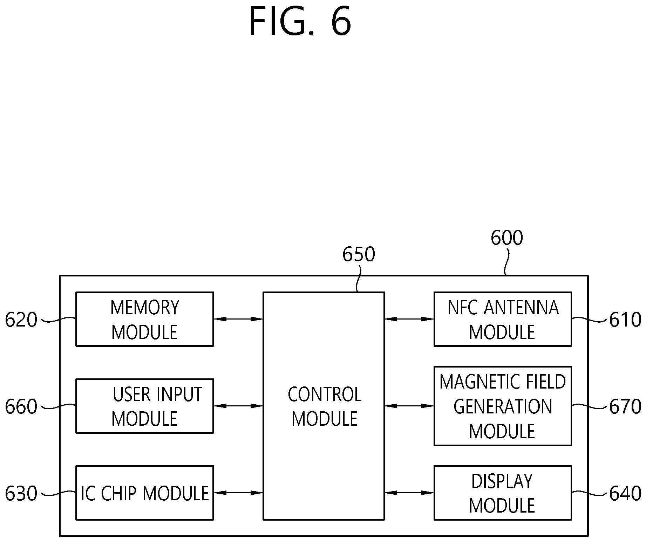

FIG. 6 is a conceptual diagram showing an inside of a smart multi-card including an NFC antenna module according to an embodiment of the present invention.

Referring to FIG. 6, a smart multi-card 600 including an NFC antenna according to embodiments of the present invention includes all or some of an NFC antenna module 610, a memory module 620, an IC chip module 630, a display module 640, a control module 650, a user input module 660, a magnetic field generation module 670, and a power supply module 680.

An NFC module corresponds to a contactless communication technology which is one of wireless tag (RFID) technologies and a communication technology for exchanging various kinds of wireless data within a short distance of 10 cm. Due to the short communication range, NFC provides relatively excellent security, has a low price, and thus is a next-generation short-range communication technology in the spotlight. Since it is possible to use both data read and write functions, a dongle (reader) which is conventionally required to use RFID is unnecessary. NFC is similar to a conventional short-range communication technology, but it is unnecessary to make a setting between devices unlike Bluetooth. The NFC module may exchange data with a communication device through wireless communication or make a contactless payment in association with a card terminal. The NFC antenna module 610 performs contactless data communication with a card reader or a communication device.

The memory module 620 functions to store information required to use the smart multi-card 600. For example, the memory module 620 may store one or more pieces of card information used for a payment or accumulation and may function to store a security certificate of a user. When the smart multi-card 600 includes a user authentication function, the memory module 620 may also store biological information of the user for user authentication. Also, the memory module 620 serves to store a plurality of pieces of card information which are received in the smart multi-card 600 to be used by the user for a payment, accumulation, or user authentication (referred to as a payment and the like below).

Further, the memory module 620 may store a program for processing and control of the control module 650. For example, the memory module 620 may store an OS for running the smart multi-card 600. Additionally, the memory module 620 may provide a work space for card operations, such as encryption and decryption.

The IC chip module 630 performs contact data communication. In other words, the IC chip module 630 exchanges data with a contact-type card terminal. When the smart multi-card 600 is inserted into a contact-type card terminal, the IC chip module 630 comes in contact with a card contact unit of the contact-type card terminal and directly changes data. For example, the IC chip module 630 may be exposed to the outside of the smart multi-card 600 and may physically come in direct contact with a contact-type card terminal to make a payment.

Also, the IC chip module 630 may have a storage space to partially serve as the memory module 620. In other words, the above-described memory module 620 may be configured in the form of an IC chip. Further, the IC chip module 630 may include an MPU to have a self-calculation function therein.

The display module 640 functions to display card information to the user. In other words, the display module 640 outputs and displays information processed in the smart multi-card 600. For example, when the smart multi-card 600 is in a payment mode, the display module 640 may display a UI or a GUI related to a card payment or information on a card for making the payment. When the smart multi-card 600 is an accumulation mode (i.e., when a selected card is an accumulation card), the display module 640 may display a barcode, a numeral, a quick response (QR) code, or the like of the accumulation card. When the smart multi-card 600 is in a user identification mode (i.e., when a selected card is a user identification card), the display module 640 may display a type of the identification card. When the smart multi-card 600 is in a card registration mode or a card issuance mode for adding a card other than previously stored cards, the display module 640 may display a UI or a GUI related to connection with a communication device or a card terminal. Also, when the smart multi-card 600 is in a use setting mode, the display module 640 visually provides a setting interface (a UI) generated by the control module 650 so that the user may change a setting by operating the user input module 660. The display module 640 may be configured as a graphic type or a segment type.

Meanwhile, when the display module 640 and a touchpad (i.e., the user input module 660 which will be described below) constitute a touch screen together in a layered structure, the display module 640 may be used as an input device as well as an output device. When the display module 640 constitutes a touch screen, the display module 640 may include a touch screen panel, a touch screen panel controller, and the like. When the display module 640 is implemented as the touch screen, the user may select card information (e.g., a company logo, an exterior card view, a card name, and the like) displayed on the display module 640 with a touch operation and may change a card by touching a portion of the touch screen in which a card change key is displayed or touching the touch screen and moving (e.g., swiping) along a predetermined path.

When a method for the touch input involves contacting the touch screen and moving along a predetermined path, the smart multi-card 600 may change a card classification, change a card type, select a card, release a card selection, and perform another operation according to a touch command input to the touch screen. For example, the touch screen may be manipulated up or down to change a card classification. In other words, it is possible to change a card classification to a credit card group of the user, a check card group of the user, and a point card group of the user. The touch screen may be manipulated left or right to change a card type in the card classification. In other words, in the case of the credit card group, it is possible to search and select a credit card for making a payment by manipulating the touch screen left or right. Also, it is possible to select a card or release a selection by touching a card image, a company logo, and the like displayed on the display module 640.

In addition, the display module 640 may include at least one of an LCD, a TFT LCD, an OLED, a flexible display, and an E-paper. According to an implementation form of the smart multi-card 600, there may be two or more display modules 640. For example, the display module 640 may be provided on each of the front side and the back side of the multi-card 600.

The control module 650 generally functions to control overall operation of the smart multi-card 600 by controlling operations of the individual units of the smart multi-card 600. For example, the control module 650 may function to determine a user's command by processing data input from the user input module 660. Also, for example, the control module 650 may extract card information selected by the user from the memory module 620, process the card information, transfer the processed card information to the display module 140, and process data transmitted and received through the NFC antenna module 610 or the IC chip module 630. Further, for example, the control module 650 may store, in the memory module 620 of the smart multi-card 600, data received from a card terminal or a communication device through wireless communication or direct contact.

The user input module 660 functions to receive input data of the user for controlling an operation of the smart multi-card 600 and transfer the input data to the control module 650. The user input module 660 may be composed of a keypad, a keyboard, a dome switch, a (static pressure/capacitive) touchpad, or the like. Particularly, when the touchpad constitutes a layered structure together with the display module 640 which will be described below, this may be referred to as a touch screen. For example, the user input module 660 may be implemented in a button-input manner in which a card is changed or selected through an arrow button and a selection button, a touchpad manner in which a touch operation of the user is input to change or select a card, and the like. In this way, the user input module 660 functions to receive an operation of the user and make a selection among a plurality of pieces of card information.

The magnetic field generation module 670 serves to cause a change in magnetic field corresponding to specific card information. The magnetic field generation module 670 may include one or more magnetic cells which output a magnetic signal of card information by generating magnetic fields through the flow of current. The magnetic cells may be composed of inductors which generate magnetic fields.

Also, the magnetic field generation module 670 may include at least one track. Each track includes a magnetic cell and may generate a magnetic signal to be provided to a header of a card reader.

The magnetic cell may be configured in various forms. For example, a single or plurality of magnetic cells may be arranged on the track. Also, the magnetic cell may have various arrangement directions. For example, the magnetic cell may be arranged to stand so that only a specific polarity is exposed on one side of the plate (i.e., in an output direction of the magnetic signal) when a magnetic field is generated. In other words, the magnetic cell may be arranged on one side of a specific plate so that only a specific polarity according to a current direction is exposed in the output direction of the magnetic signal. In another example, the magnetic cell may be arranged so that both the polarities are exposed in the output direction of the magnetic signal. The magnetic field generation module 670 may be arranged on the back side of the plate and arranged adjacent to a long side on which a first bent corner is not placed or adjacent to a long side other than a specific bent side in order to ensure a magnetic length and perform a swiping operation in a card reader. In addition, the magnetic field generation module 670 of the back side may be arranged not to overlap the display module 640 of the front side so that the display module 640 is not damaged by the swiping operation.

The power supply module 680 serves to supply power required for operations of individual elements under control of the control module 650.

An arrangement of one or more parts or modules in the smart multi-card 600 or a structure of the smart multi-card 600 according to embodiments of the present invention will be described below.

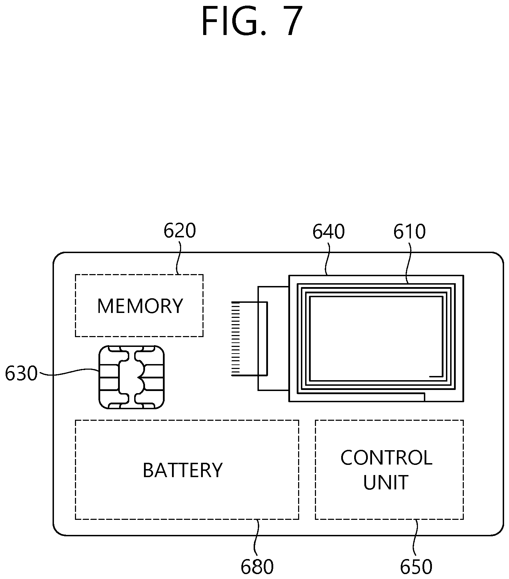

In the smart multi-card 600 including the NFC antenna module 610 according to an embodiment of the present invention, the NFC antenna module 610 may be formed with a size equal to or smaller than the display module 640 and arranged to be horizontal to the display module 640 as shown in FIG. 7. In a conventional structure in which an NFC antenna is arranged at edges of a card, it is not possible to arrange other parts or modules in a region in which the NFC antenna is arranged, and thus there is a problem in that a space available for card parts is reduced.

To solve this problem, the NFC antenna module 610 may be formed with a size which may be included in the display module 640 and horizontally arranged on the back side of the display module 640. In other words, when the thickness of the display module 640 is thinner than a card thickness, a back space may remain, and thus the NFC antenna module 610 may be arranged in the back space of the display module 640.

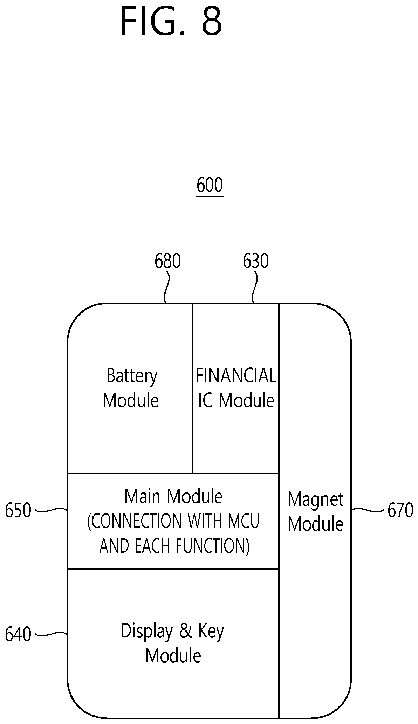

The smart multi-card 600 including the NFC antenna module 610 according to another embodiment of the present invention may be manufactured so that one or more modules included in the smart multi-card 100 can be attached and detached. In other words, elements in the multi-card 100 may be formed as modules which are attachable and detachable. Modules having the same function may be formed in the same shape. For example, as shown in FIG. 8, the control module 650 (i.e., a main module), the power supply module 680, the IC chip module 630, the display module 640, and the magnetic field generation module 670 may be formed with a specific size. In this way, modules which have different specifications but the same shape are changed with each other, so that the smart multi-card 600 can be rapidly manufactured. Also, instead of an undesired element, a plastic module having the same shape (i.e., a module including no internal configuration for performing a function) may be combined to manufacture the smart multi-card 600. Specifically, the modules may be individually formed in printed circuit boards (PCBs) having the same thickness, and the plurality of modules may be combined to form a card shape.

One or more elements or modules of the smart multi-card 600 other than the control module 650 may be connected to the control module 650 centered therein. Since the control module 650 controls operations of other modules, modules other than the control module 650 may be directly connected to the control module 650 and receive control commands. The user input module 660 or the NFC antenna module 610 may transfer received data (i.e., a user operation or a wireless communication signal) directly to the control module 650.

It is necessary to make a contact connection so that the control module 650 transfers control commands to other modules and receives data from other modules. To this end, each module may include a connection interface. The control module 650 may include a plurality of connection interfaces (i.e., a first connection interface 691) to which different modules can be individually and directly connected and which correspond to the number of connectable modules. Modules other than the control module 650 may include connection interfaces (i.e., second connection interfaces 692) at positions corresponding to the connection interface of the control module 650 (i.e., the first connection interface 691). The connection interfaces may have various forms capable of exchanging data or delivering power between modules. For example, the connection interfaces may be implemented in the form of an input/output (I/O) port corresponding to a specific pin shape or implemented as a contact terminal which can be connected through a contact.

The control module 650 and other modules may be combined with each other by male and female coupling structures. For example, grooves may be provided at positions in the control module 650 to which the individual modules will be coupled, and the individual modules may have shapes corresponding to the grooves.

When the control module 650 and other modules are combined with each other by male and female coupling structures, the first connection interface 691 and second connection interfaces 692 may be included in the male and female coupling structures. Through the interfaces, each module may have a wired connection for transferring power and data when combined with the control module 650.

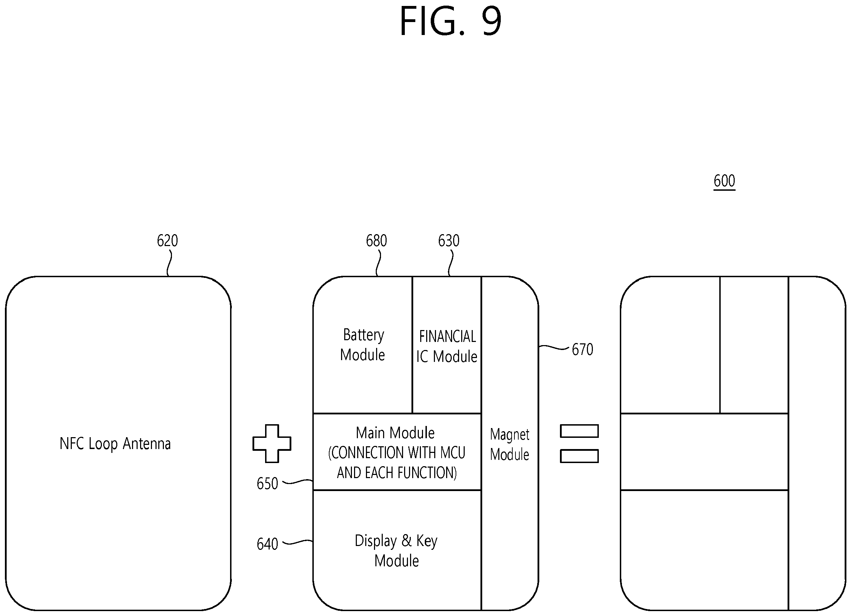

The NFC antenna module 610 may be formed as a housing which surrounds sides of the multi-card 600 combined with the one or more modules. When the NFC antenna module 610 is formed as a module of a specific size, there is insufficient space for other modules. Therefore, to ensure space in which modules other than the NFC antenna module 610 will be arranged, the NFC antenna module 610 may be formed as a housing which surrounds the sides of the multi-card 600 as shown in FIG. 9. The housing may be formed in various shapes, such as a shape surrounding the multi-card 600 with which other modules are combined (e.g., a bumper shape which prevents impact). The housing may include an NFC antenna which is wound a plurality of times. With the wound NFC antenna, it is possible to keep the one or more modules combined.

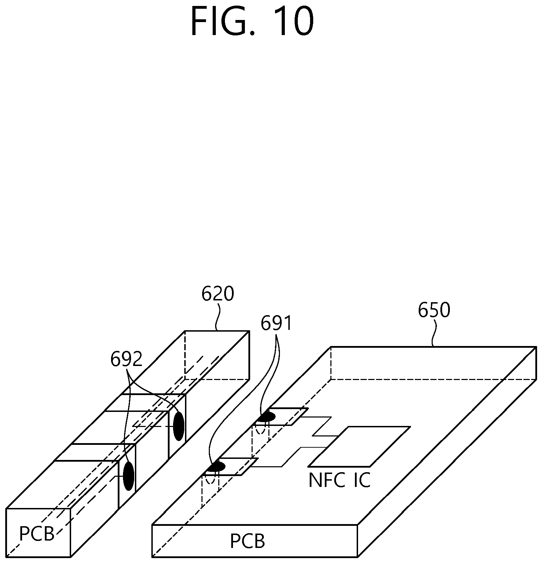

As shown in FIG. 10, the NFC antenna module 610 may include a second connection interface 692 which comes in contact with a specific first connection interface 691 formed on one side of the control module 650 and receives data to be transmitted to the outside and driving power. For example, the second connection interface 692 which is a metal terminal may be provided on an internal side of the NFC antenna module 610, and the second connection interface 692 may come in contact with and be connected to the first connection interface 691 provided in the control module 650. The NFC antenna module 610 may receive signal data from the control module 650 through the second connection interface 692 and send the received signal data to the outside.

In other words, a smart multi-card may include an NFC antenna module which performs contactless data communication with a card reader or a communication device, a memory module which stores a plurality of pieces of card information, an IC chip module which performs contact data communication, a display module which visually displays card information selected by a user, and a control module which extracts the card information from the memory module, processes the card information, transfers the processed card information to the display module, and processes data transmitted and received through a wireless communication unit. Here, one or more modules included in the multi-card are attachable and detachable, and the control module includes one or more first connection interfaces which are connected to one or more modules and transfer data to the one or more modules. Each of the one or more modules includes a second connection interface having a structure connectable with a first connection interface at a position corresponding to the first connection interface. The control module and the one or more modules are individually formed in PCBs having the same thickness, and the NFC antenna may form a card shape when the control module and the one or more modules are combined.

Here, the NFC antenna module may be formed with a size equal to or smaller than the display module and arranged on the back side of the display module, and a magnetic field generation module which causes a change in magnetic field corresponding to specific card information and includes one or more inductors may be further included. The NFC antenna module may be formed as a housing which surrounds sides of the multi-card with which the one or more modules are combined. Also, the NFC antenna module may include a second connection interface which comes in contact with a specific first connection interface formed on one side of the control module and receives data to be transmitted to the outside and driving power.

The display module may be implemented as a touch screen. A card classification output on the display module may be selected on the basis of an up or down touch on the touch screen, and one of a plurality of cards included in the card classification may be selected on the basis of a left or right touch on the touch screen.

According to the present invention described above, the following effects can be obtained.

First, according to the present invention, it is possible to provide one smart multi-card including all of a plurality of pieces of card information having any one of a contact-type output scheme, a contactless-type output scheme, and an output scheme in which a smart device is used.

Second, according to the present invention, it is possible to provide a smart multi-card in which a payment or accumulation can be performed by simultaneously using a plurality of card output schemes.

Third, according to the present invention, it is possible to save costs for producing unnecessary cards by storing a plurality of pieces of card information in one card, and a user can simultaneously perform a payment or accumulation according to individual card output schemes of the plurality of cards.

Meanwhile, the above-described method can be written as a program executable in a computer and may be implemented in a general-purpose digital computer that runs the program using a computer-readable medium. A structure of data used in the above-described method may be recorded in the computer-readable medium in various ways. The computer-readable medium that stores executable computer codes for performing the various methods of the present invention includes storage media, such as magnetic storage media (e.g., a read-only memory (ROM), a floppy disk, a hard disk, and the like) and optical media (e.g., a compact disk read-only memory (CD-ROM), a digital versatile disk (DVD), and the like).

It will be understood by those having general knowledge in the technical field related to the embodiments of the present invention that the present invention may be implemented in modified forms within a range which does not depart from the essential characteristics of the above disclosure. Therefore, the disclosed methods should be considered not in a limited viewpoint but in a descriptive viewpoint. The scope of the present invention is disclosed not in the detailed description of the present invention but in the claims, and all differences lying within the range of its equivalents shall be construed as being included in the scope of the present invention.

## Claims

1. A smart multi-card device which makes it possible to simultaneously use a plurality of card output schemes, the smart multi-card device comprising:
a storage unit configured to store one or more pieces of card information input by a user and having individual card output schemes;
a sensor unit configured to include a plurality of sensors, each of which is matched to one or more pieces of card information among the one or more pieces of card information input by the user; and
a control unit configured to, when the user contacts a specific sensor among the one or more sensors, load card information matched to the specific sensor and controls a payment or accumulation to be performed according to a card output scheme of the loaded card information,
wherein when a plurality of pieces of card information are matched to the specific sensor, the plurality of pieces of card information are loaded, and the payment or the accumulation is simultaneously performed according to card output schemes of a plurality of loaded cards.

2. The smart multi-card device of claim 1, wherein each of the card output schemes is any one of a contact-type output scheme, a contactless-type output scheme, and an output scheme in which a smart device is used.

3. The smart multi-card device of claim 2, wherein, according to the contact-type output scheme, the payment or the accumulation is performed when the smart multi-card comes in contact with or is inserted into a contact-type payment terminal,
according to the contactless-type output scheme, the smart multi-card is recognized by a contactless-type payment terminal to perform the payment or the accumulation, and
according to the output scheme in which a smart device is used, the smart multi-card loads a card stored in the smart device to perform the payment or the accumulation through the contact-type or contactless-type payment terminal.

4. The smart multi-card device of claim 3, wherein the plurality of pieces of card information matched to the specific sensor have different card output schemes.

5. The smart multi-card device of claim 1, wherein the plurality of pieces of card information matched to the specific sensor include at least one of card information for payment and card information for accumulation.

6. The smart multi-card device of claim 1, wherein the matching is settable by the user himself or herself.

7. The smart multi-card device of claim 1, wherein a plurality of situations in which the user uses a card are distinguished , and
the matching is set so that at least one or more pieces of card information used in each of the plurality of situations among the input one or more pieces of card information correspond to each of the plurality of sensors.

8. The smart multi-card device of claim 7, wherein the sensor unit includes a touch sensor,
the plurality of situations are classified according to a number of touch times of the touch sensor, and
the payment or the accumulation is performed using one or more pieces of card information matched to a situation corresponding to a number of times that the user touches the touch sensor.

9. The smart multi-card device of claim 1, further comprising:
a display unit configured to display at least one kind of information among the one or more pieces of card information and the card output schemes input by the user and the loaded card information and card output scheme.

10. The smart multi-card device of claim 9, wherein the card output scheme includes a barcode output scheme,
when the user touches a specific sensor among the one or more sensors, the control unit controls the display unit to display barcode information corresponding to card information matched to the specific sensor, and
the payment or the accumulation is performed when the displayed barcode information is scanned by a payment terminal.

11. A method of performing a payment or accumulation using a smart multi-card which makes it possible to simultaneously use a plurality of card output schemes, the method comprising:
receiving one or more pieces of card information having individual card output schemes from a user;
matching at least one piece of card information among the one or more pieces of card information received from the user to each of a plurality of sensors in the smart multi-card; and
when the user contacts a specific sensor among the one or more sensors, loading card information matched to the specific sensor and performing a payment or accumulation according to a card output scheme of the loaded card information,
wherein when a plurality of pieces of card information are matched to the specific sensor, the plurality of pieces of card information are loaded, and the payment or the accumulation is simultaneously performed according to card output schemes of a plurality of loaded cards.
